# EUROPEAN PATENT SPECIFICATION

(11) **EP 3 391 722 B1**
(45) Date of publication and mention of the grant of the patent: **20.05.2020**
(21) Application number: 18168551.2
(22) Date of filing: 20.04.2018
(51) Int. Cl.: A01C 9/02

(54) **BELT PLANTER**
BANDPFLANZMASCHINE
MACHINE DE PLANTATION À COURROIE

(30) Priority: 20.04.2017 NL 1042346; 20.04.2017 NL 1042348
(43) Date of publication of application: 24.10.2018
(73) Proprietor: Dewulf B.V., 8331 XA Winsum (NL)
(72) Inventor: SIDERIUS, Willem Goffe, 9044 NW Beetgum (NL); DE BOE, Gert, 9080 Lochristi (BE); ROZEMA, Bart-Jan, 9861 AR Grootegast (NL); MEINDERTSMA, Siebe, 9172 NZ Ferwert (NL); VAN ISEGHEM, Joeri, 8770 Ingelmunster (BE)
(74) Representative: Hostens, Veerle

(56) References cited:
- EP-A1- 2 047 736
- NL-A- 6 618 235
- US-A- 3 526 344

## Description

The present invention relates to a belt planter for planting seedlings such as potatoes or other tuberous or bulbous plants while the belt planter is moving along a direction of travel, comprising a belt bed comprising at least two planting belt units, each of which is provided in order to supply seedlings to be planted along a supply direction in one row from a supply point to a discharge point, and comprising return means on either side of each planting belt unit in order to return seedlings which fall out of the row counter to the supply direction towards the supply point.

Belt planters or belt bed planters are used to plant tuberous or bulbous plants, such as for example potatoes or onions. Planting such plants is also referred to as setting.

Examples of belt planters are described in US 3,526,344 and NL6 618 235.

Usually, such a belt planter comprises a storage hopper, in which the seedlings are arranged, a belt bed on which the seedlings land from the storage hopper, and furrow openers for forming furrows/trenches in the ground, in which case the seedlings fall from the belt bed into the furrows which have been formed. A furrow opener is often also referred to by the term coulter. The belt bed usually comprises two or more planting belt units, which are each provided in order to supply seedlings to be planted along a supply direction in one row from a supply point to a discharge point, in which case the seedlings fall from the discharge point into a said trench. The belt bed furthermore comprises return means on either side of each planting belt unit in order to return seedlings which fall out of the row to the supply point counter to the supply direction. The operation and design of the belt bed is such that one row of consecutive seedlings is formed on each planting belt unit in such a way that the seedlings are planted one by one into the grooves which have been formed. Forming this row is also referred to by the term singulation. In other words, singulation of the seedlings takes place on every planting belt unit so that the seedlings lie in one row on each belt unit, at the location of the discharge point, and can be placed in a said trench seedling after seedling.

When arranging the seedlings in the trench, it is important that this is done evenly and that each seedling is planted separately. To this end, the seedlings have to be present in one consecutive row on each planting belt unit. Thus, the better the singulation, the more evenly the seedlings are planted in the ground. Due to the dimensions and the design of the belt bed and the belt planter in general, there are limitations with regard to singulation. The seedlings, which are situated on the return means which are situated next to a planting belt unit and which are then taken by the return means to the supply point, can come into contact with one or more seedlings which are present in a said row of seedlings on a said planting belt unit. As a result thereof, seedlings are pushed out of the said row and/or additional seedlings end up on the planting belt unit. In order to prevent problems with regard to singulation, the speed of the planting belt units is restricted and the supply speed from the storage hopper to the belt bed is limited. In other words, a belt planter thus has a certain capacity and there is always a maximum speed at which it is possible to still plant relatively successfully. It would therefore also be desirable to be able to optimize the singulation in belt planters in such a way that it is always possible to plant successfully, also, for example, at higher speeds than are possible today.

As described in US 3,526,344, walls/partitions are provided between the return means of two successive planting belt units, in order to prevent the seedlings from being excessively pushed to one side when used on sloping terrain. Often, singulation does not proceed in an optimum manner with such walls/partitions, as the seedlings, in particular if these are large seedlings or if there are many seedlings on the return means, hit the walls/partitions and are then pushed to the seedlings which are situated on a said planting belt unit.

It is therefore an object of the invention to optimize the singulation on the planting belt units.

This object is achieved by providing a belt planter for planting seedlings, such as potatoes or other tuberous or bulbous plants while the belt planter is moving along a direction of travel, comprising a belt bed comprising at least two planting belt units, each of which is provided in order to supply seedlings to be planted along a supply direction in one row from a supply point to a discharge point, and comprising return means on either side of each planting belt unit in order to return seedlings which fall out of the row counter to the supply direction, towards the supply point, in which the return means are successively arranged between two successive planting belt units of said planting belt units, so that seedlings can roll between these successive planting belt units on these return means and in which the belt bed is arranged so as to be hingeable around a hinge axis along the direction of travel and the belt planter comprises a slope sensor for determining the slope of the belt bed with respect to the level and control means for rotating the belt bed around the said hinge axis on the basis of the slope determined by the slope sensor. In this way, it is always possible to position the belt bed virtually horizontally (level) in case planting has to be carried out on sloping pieces of land and/or uneven terrain.

With existing belt planters the dimensions of the return means which extend next to the planting belt units form a limitation. With the belt planter according to the invention, the return means are successively arranged between two successive planting belt units of said planting belt units, over at least a part of the length of these return means. As a result thereof, the seedlings can roll between these successive planting belt units on these return means and the seedlings can move forward across the entire width which is present between two planting belt units. The risk of seedlings which are taken in the direction of the supply point by the return means, repelling seedlings or touching seedlings is therefore smaller here. In other words, at least over a part of the length of the return means, this belt bed is free from partitions which impede singulation. The one or more return means which are situated between two successive planting belt units in this case thus form one joint bed over at least a part of the length of the return means on which the seedlings can move forward and/or are carried along. Thus, seedlings which are situated on return means between two successive planting belt units are thus able to move over the entire width between these planting belt units over at least a part of the length of the return means and can be carried along in the direction of the supply point, as a result of which the risk that they will impede seedlings situated on the planting belt units is smaller than with the existing belt planters.
The rotation of the belt bed on the basis of the slope determined by the slope sensor prevents seedlings from rolling too much towards one side of the belt bed which would cause an uneven distribution of the seedlings across the belt bed. In addition, this also benefits singulation.
Since singulation here takes place under better circumstances, the speed of these planting belt units may, if desired, be increased, as a result of which the maximum capacity of this belt planter is higher than that of the existing belt planters.

The said successively arranged return means are preferably successively arranged in connection with the discharge point, so that seedlings are prevented from being pushed out of the row in particular at the location of the discharge point.

The length of the return means typically virtually corresponds to the length of the planting belt units between which these return means are arranged and typically also corresponds to the length of the belt bed.

Preferably, the return means are successively arranged between two successive planting belt units of said planting belt units over at least ¼ of the length of these return means. Partitions then extend over at most ¾ of the length of these return means. Still more preferably, these return means are successively arranged over at least 30% of the length of the return means, in particular over at least 40% and preferably over at least 50%, or even at least 60%, at least 70%, at least 80%, at least 90% or even at least 95%.

Extremely preferably, the return means are arranged successively between two successive planting belt units of the said planting belt units over the entire length of these return means. Since, in that case, there are not hampering partitions and the entire width between two successive planting belt units can be used, the planting belt units can also be arranged closer together, without adversely affecting good singulation. By means of this belt planter, it is thus possible to plant seedlings in rows which are arranged closer together than with the existing belt planters. As a result thereof, the yield per hectare of land may increase significantly.

Preferably, each planting belt unit comprises several conveying belts. Likewise preferably, the supply direction virtually corresponds to the direction of travel.

In a preferred embodiment, the return means at the location of the supply point are arranged at a downward slant towards the respective planting belt units, viewed in a direction at right angles to the supply direction, in which case the lowest point of the return means is thus next to the planting belt unit and the highest point is furthest from this planting belt unit. In this embodiment, the return means at the location of the discharge point are arranged at an upward slant towards the respective planting belt units, viewed in a direction at right angles to the supply direction, in which case the highest point of the return means is thus situated next to the planting belt unit and the lowest point is furthest from this planting belt unit. This arrangement ensures that several seedlings form one consecutive row at the location of the discharge point on each planting belt unit and prevents seedlings from being pushed out of this row. At the location of the supply point, the seedlings roll towards the row in order to be included in the row, while, at the location of the discharge point, seedlings which have not been included in the row roll away from the row. At the location of the discharge point, seedlings which are situated next to a said planting belt unit, have to overcome an upward slope before they can make contact with the seedlings on the said planting belt unit. When the belt bed is positioned at an incline, for example if planting takes place on a sloping field and/or on an uneven field, this arrangement prevents that all the seedlings will start to roll towards the lowest planting belt unit, thereby ensuring that the seedlings are efficiently and evenly distributed over the belt bed. Here, for example, the belt bed has an undulating pattern at the location of the discharge point.

Preferably, the return means are designed as conveying belts. By means of conveying belts, it is easy to achieve the desired slopes. It is also easy to twist a row of conveying belts, so that this row is arranged at a downward slope at the location of the supply point towards the respective planting belt units, viewed in a direction at right angles to the supply direction, and is arranged at an upward slope at the location of the discharge point towards the respective planting belt units, viewed in a direction at right angles to the supply direction. By means of conveying belts, it is for example readily possible to produce a belt bed with an undulating pattern. Preferably, there are at least two conveying belts between two successive planting belt units.

In an alternative embodiment, the return means are configured as conveyor belts. However, if a belt planter with return means and a certain slope is desired, it is less easy to achieve this slope using conveyor belts.

In a specific embodiment, the return means between the two successive planting belt units form part of the same conveyor belt. In that case, only one conveyor belt has to be provided between two successive planting belt units, which is easier. However, providing this conveyor belt with the desired slope is less easy.

Preferably, a first planting belt unit of the successive planting belt units is arranged between a longitudinal side of the belt bed and the second subsequent planting belt unit and the width of the return means between this first planting belt unit and the said longitudinal side of the belt bed is at least as wide as half the width of the return means between the first planting belt unit and the second planting belt unit. Here, the distance extending between the longitudinal side and the first planting belt unit is thus at least half the distance extending between the first planting belt unit and the second planting belt unit. In this way, there is sufficient distance between this longitudinal side and this first planting belt unit, so that seedlings which are moved by the return means situated between the first planting belt unit and the longitudinal side will hardly, if at all, impede the singulation on the first planting belt unit. Furthermore preferably, this width of the return means between this first planting belt unit and the said longitudinal side of the belt bed is at least 60% of the width of the return means between the first planting belt unit and the second planting belt unit, still more preferably at least 75%. In this case, the singulation on each planting belt unit proceeds in an optimum manner.

Preferably, if there are at least three planting belt units, the distance between two successive planting belt units is virtually always equal.

As the belt bed has a certain weight and the seedlings are arranged in this belt bed, the total weight of the belt bed during use together with the seedlings which are arranged thereon is high. As it is possible to position the belt bed level or at least at a smaller angle, the stability of the entire belt planter is improved. A good stability of the belt planter also means that the belt planter can be moved across the piece of land at a certain speed during planting. In many cases, the belt bed constitutes a large part of the belt planter. In this way, the part of the belt planter can remain horizontal, even when planting on a sloping piece of land.

When a planting machine is moved forward on sloping or inclined piece of land by means of a transport element, this transport element will follow the slope of the piece of land. In the case of a sloping piece of land, this therefore means that the transport element will be at an angle with respect to the level. With the existing planting machines, the belt bed follows this transport element and therefore this belt bed will end up at an angle with respect to the level. The seedlings are intended to fall from the belt bed into grooves/furrows which may or may not be formed by the belt planter. The function of the belt bed is thus to place the seedlings in the furrows. Most belt planters comprise a furrow opener in order to form grooves/furrows in the ground. Viewed along the direction of travel, the furrow openers are situated in front of the location where the seedlings leave the belt bed in the direction of the field. When the belt bed is at an angle with respect to the level, the seedlings fall into these furrows/grooves less accurately or not at all. This means that certain seedlings will be planted in an unsatisfactory manner, if at all. An additional advantage of rotating of the belt bed with respect to the hinge axis is therefore that, as a result thereof, it is possible to ensure that the seedlings fall closer to the centre of the furrows which have been formed.

The said hinge axis around which the belt bed may be arranged, may always be situated in the same position. However, embodiments are also possible in which the hinge axis is arranged so as to be horizontally and/or vertically displaceable. This hinge axis may be a physical shaft, but may also be an imaginary axis, in which case the belt bed, due to the specific suspension of the belt bed, is hingeable around an axis which deviates from the suspension points thereof. Said hinge axis is preferably arranged in a fixed position. Still more preferably, this hinge axis is arranged centrally.
Furthermore preferably, the belt planter comprises a transport element in order to support the belt bed and to displace the belt bed along the direction of travel, in which case the belt bed is arranged with respect to the transport element so as to be hingeable around the hinge axis. In order to arrange the belt bed in the belt planter so as to be hingeable around the hinge axis, the belt bed is hingeably arranged with respect to the transport element.
More specifically, the belt planter may comprise a second slope sensor in order to determine the slope of the transport element with respect to the level, in which case the control means are then provided for rotating the belt bed around the said hinge axis on the basis of the slope determined by this second slope sensor.
The transport element may comprise, for example, a rear axle with caterpillar tracks and/or wheels. These wheels and/or caterpillar tracks then follow the slope of the field, as a result of which the belt planter is always well supported by the transport element and readily displaceable along the direction of travel.
If this transport element comprises a wheel axle and the belt planter comprises a second slope sensor, the second slope sensor is preferably arranged on the wheel axle.

In a preferred embodiment comprising a hingeably arranged belt bed and a said transport element, the belt planter furthermore comprises an angle sensor in order to determine the angular rotation of the belt bed with respect to the transport element. Using such an angle sensor, it is possible to limit the operation of the control means of the belt bed to a certain degree of tilt of the belt bed with respect to the transport element. This prevents the degree of tilt between the two from becoming excessively large which would result in the planting machine no longer functioning in a satisfactorily way. The control means may allow, for example, a degree of tilt between the belt bed and the transport element of at most 5°.

Preferably, the control means for rotating the belt bed comprise one or more actuators. The one or more actuators may be, for example, one or more hydraulic cylinders. Thus, the actuators may comprise, for example, two hydraulic cylinders which are arranged on either side of the hinge axis, in which case these hydraulic cylinders are connected to each other on their rod side or piston side as communicating vessels. It is then also possible to measure the pressure on the rod side or the piston side of these hydraulic cylinders and to provide the control means in order to rotate the belt bed on the basis of this pressure.

Furthermore preferably, one or more of the said actuators are arranged between the belt bed and the transport element. In this way, the actuators can directly hinge the belt bed around the said hinge axis on the basis of the locomotion of the transport element.

In addition to the belt bed itself, other components of the belt planter may be arranged so as to be hingeable together with this belt planter. Thus, a bunker and/or a frame and/or a feed belt, etc. may be hingeable in the belt planter together with the belt bed.

Furthermore preferably, this belt planter comprises a furrow opener in order to form furrows for arranging seedlings to be planted therein, in which case this furrow opener is arranged with respect to the belt bed so as to be hingeable around a hinge axis along the direction of travel, this in case this belt bed is also arranged in the belt planter so as to be hingeable around a hinge axis along the direction of travel.
In this way, the furrow opener is able to follow the slope of the piece of land/field, while the belt bed is being kept in a horizontal position (level) at the same time.
In order to be able to plant seedlings in a satisfactory manner, it is important for the furrows which have been formed to always be of virtually the same depth along their entire length. The reason for this is that it is desirable for the seedlings to be planted evenly and thus for each seedling to be planted at virtually the same depth. Therefore, it is important for the furrow opener to follow the piece of land and consequently also the slope of the piece of land as well as possible. As the furrow opener is arranged so as to be hingeable around a hinge axis with respect to the belt bed, it is possible to adjust the position of the furrow opener on the basis of the slope of the piece of land, even after the belt bed has been positioned at a smaller angle than the piece of land or even level. Thus, variation of the depth of the grooves which have been formed is limited in this case.
The hinge axis of the furrow opener may also always assume the same position. However, embodiments are also possible in which the hinge axis is arranged so as to be horizontally and/or vertically displaceable. This hinge axis may be a physical shaft, but may also be an imaginary axis, in which case the furrow opener, due to the specific suspension of the furrow opener, is hingeable around an axis which deviates from the suspension points thereof. Said hinge axis is preferably arranged in a fixed position. Still more preferably, this hinge axis is arranged centrally. Most preferably, this hinge axis coincides with the said hinge axis around which the belt bed is hingeable in the belt planter.

Furthermore preferably, the furrow opener comprises wheels for supporting this furrow opener which are arranged on either side of the hinge axis. By means of wheels, it is very simple to follow the slope of the piece of land. In this case, it is for example possible to arrange the furrow opener so as to be hingeable around the said hinge axis and to allow only the wheels to determine the tilt. In this case, there will be an automatic tilting of the furrow opener, as the furrow opener, on account of its weight, rests on the piece of land by means of the wheels and the wheels follow the piece of land. These wheels provide additional support for the belt planter and give the belt planter additional stability. In an alternative embodiment, the furrow opener comprises caterpillar tracks instead of wheels.

If desired, it is alternatively or additionally possible to provide additional control means, such as actuators, which control the tilt of the furrow opener. In this case, the belt planter may then, for example, be provided with measuring means (sensors), in which case these additional control means are controlled on the basis of what these measuring means measure. These measuring means may also comprise the slope sensor for controlling the said control means in order to rotate the belt bed around the said hinge axis.

The present invention will now be explained in more detail by means of the following detailed description of a belt planter according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which:
- ***Fig. 1*** shows a perspective view of a belt planter according to the invention;
- ***Fig. 2*** shows a perspective view of the belt planter illustrated in Fig. 1 in which case the part situated above the belt bed is not illustrated in order to make the belt bed clearly visible;
- ***Fig. 3*** shows a perspective view of a first embodiment of a belt bed of a belt planter according to the invention;
- ***Fig. 4*** shows a perspective view of a second embodiment of a belt bed of a belt planter according to the invention;
- ***Fig. 5*** shows a section through the belt bed illustrated in Fig. 3 along a plane at right angles to the direction of travel of the belt planter at the location of the supply point;
- ***Fig. 6*** shows a section of the belt bed illustrated in Fig. 4 along a plane at right angles to the direction of travel of the belt planter at the location of the supply point;
- ***Fig. 7*** shows a front view of the belt bed and the furrow opener of a belt planter according to the present invention when planting takes place on a horizontal field;
- ***Fig. 8*** shows a front view of the belt bed and the furrow opener of a belt planter according to the present invention when planting takes place on a sloping field;

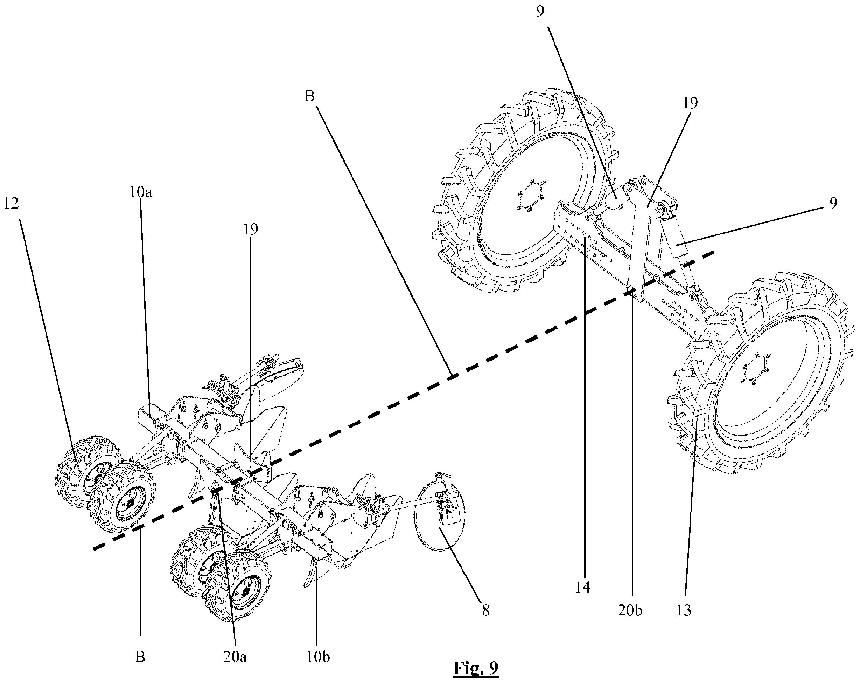

- ***Fig. 9*** is a reproduction of Fig. 1, in which, inter alia, the belt bed and the ridging plate have not been illustrated;
- ***Fig. 10*** shows a rear view of the belt planter illustrated in Fig. 1, when planting takes place on a horizontal piece of land;
- ***Fig. 11*** shows a rear view of the belt planter illustrated in Fig. 1, when planting takes place on a sloping piece of land.

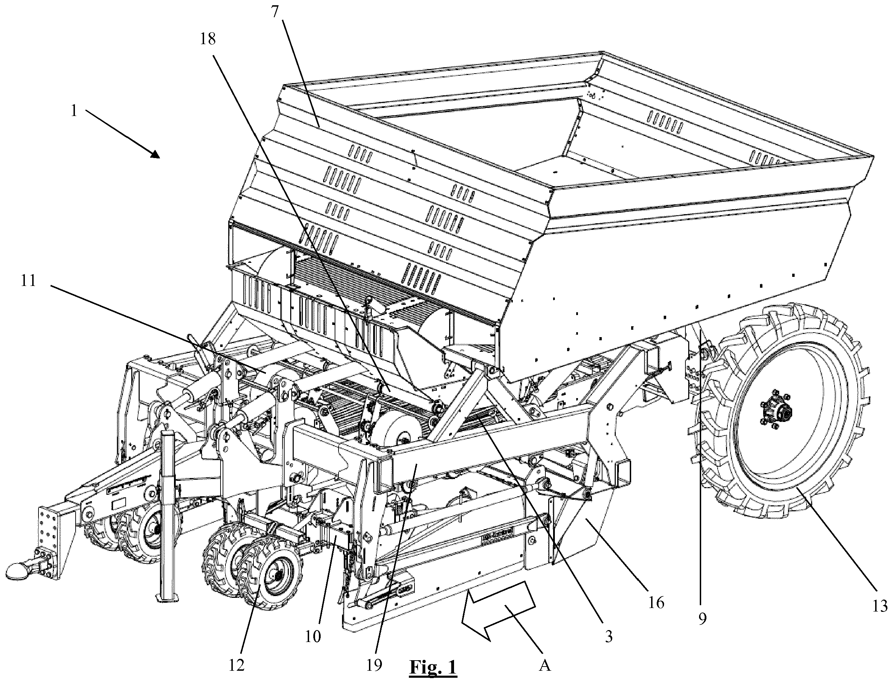

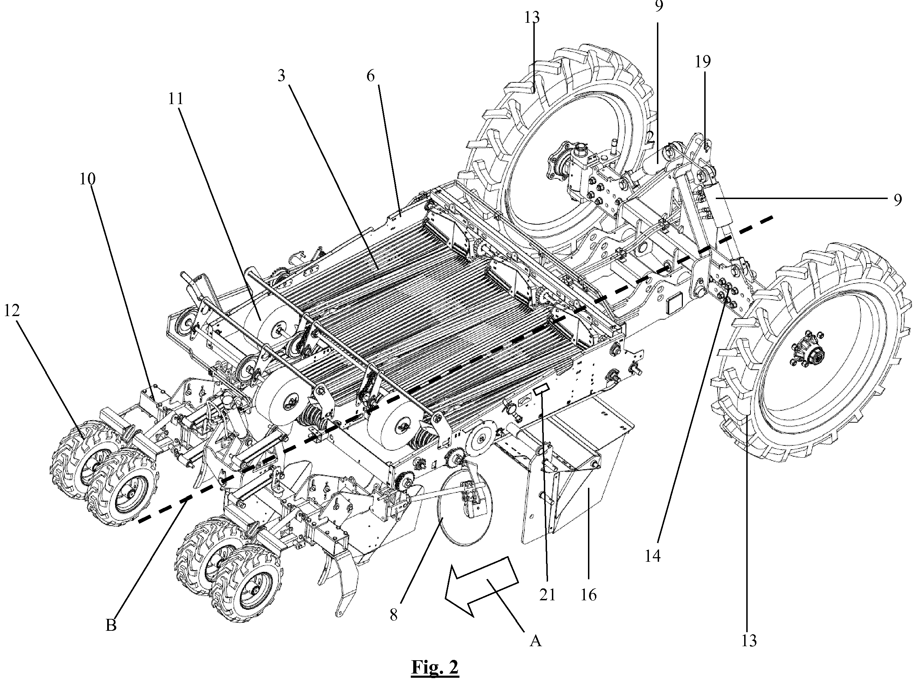

The belt planter (1) illustrated in Figs. 1 and 2 is a potato planter (1) which inter alia comprises the following components:
- a storage hopper (7), in which the potatoes (2) to be planted are placed;
- a belt bed (3);
- a frame (19) which, inter alia, supports the belt bed (3) and the storage hopper (7);
- a furrow opener (10) for forming furrows (grooves), in which the potatoes (2) are planted, in which the furrow opener (10) is connected to the frame (19) so as to be hingeable around a hinge axis (B) which extends along the direction of travel (A). This direction of travel (A) is illustrated with an arrow in Figs. 1 and 2. The furrow opener (10) is furthermore connected to front wheels (12) in order to support the furrow opener (10) and to guide it across the piece of land;
- a transport element for supporting the belt bed (3) and for displacing the belt bed (3) along the direction of travel (A). This transport element comprises a rear axle (14) with rear wheels (13), in which this rear axle (14) is hingeably connected to the frame (19) at the location of a hinge point (20b) along a hinge axis (B) which extends along the direction of travel (A). The belt planter (1) rests on the field (17) by means of the rear axle (14) and the rear wheels (13);
- ridging discs (8) for covering the formed grooves and for forming ridges;
- a ridging element (16), being a ridging plate (16), for further ridging the formed ridges.

With this belt planter (1), the potatoes (2) are placed on the feed belt (18) from the storage hopper (7) and then on the belt bed (3). The belt bed (3) comprises three planting belt units (4) which are each provided for supplying the potatoes to be planted (2) from a supply point (I) to a discharge point (O) along a supply direction and in one row. Furthermore, the belt bed (3) comprises return means (5) on either side of each planting belt unit (4) for returning seedlings which fall out of the row to the supply point (I) counter to the supply direction. Here, there are thus two outer planting belt units (4) and one middle planting belt unit (4) which is situated between the two outer planting belt units (4). Furthermore, the belt planter (1) comprises three rollers (11) which are each respectively arranged at a said discharge point (O). The potatoes (2) leave the belt bed (3) one by one at the location of a said roller (11) and thus fall into the formed trench one by one, between the furrow opener (10) and the ridging discs (8). The furrow opener (10) here comprises an accessories beam (10a) with three openers (10b) for making 3 grooves. The accessories beam (10a) is hingeably connected to the frame (19) at the location of a hinge point (20a) in order to hingeably connect the furrow opener (10) to this frame (19).

The supply direction is a direction towards the front side of the belt bed (3), viewed along the direction of travel (A) of the belt planter (1). In this case, the supply direction corresponds to the direction of travel (A).

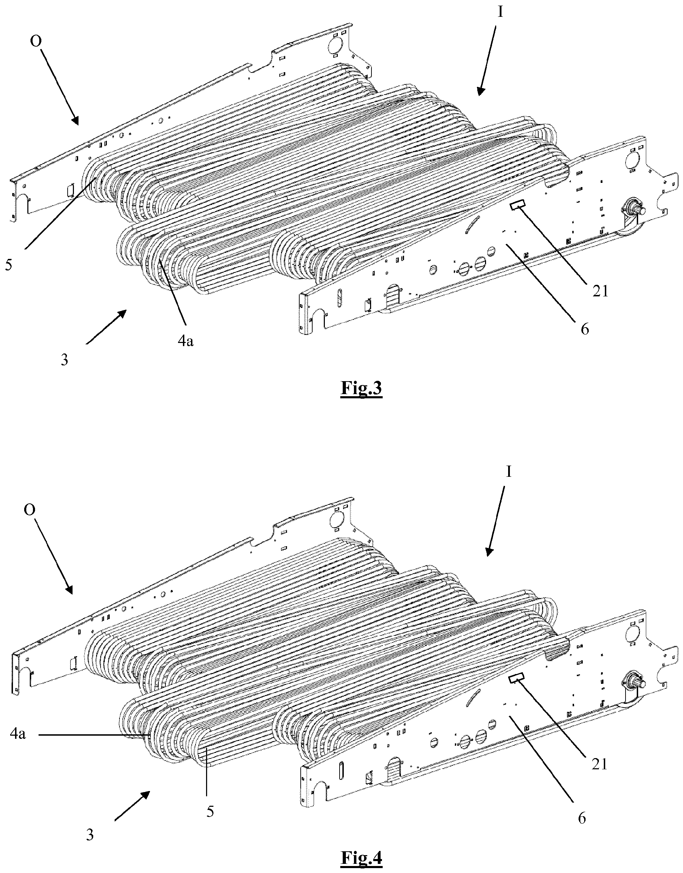

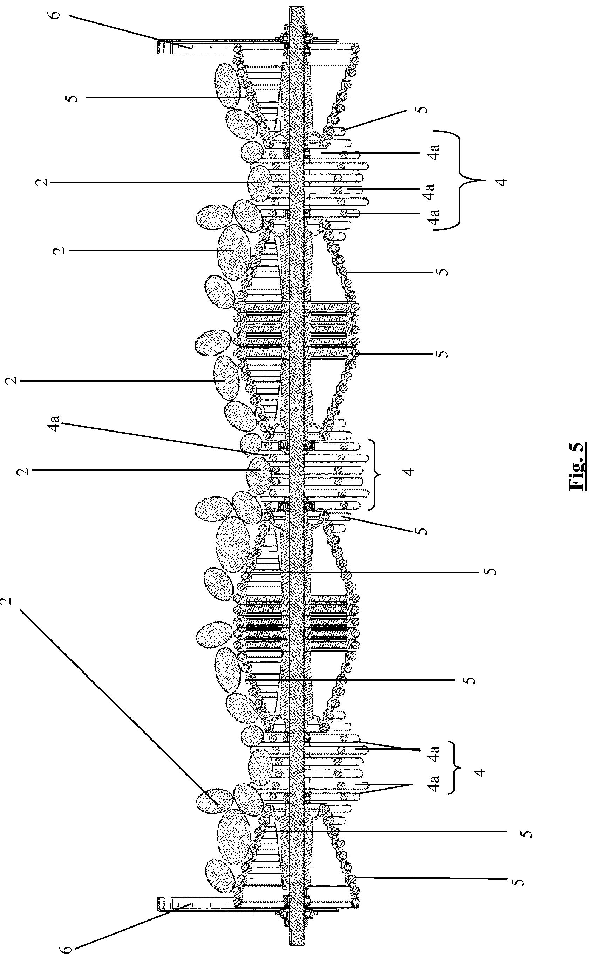

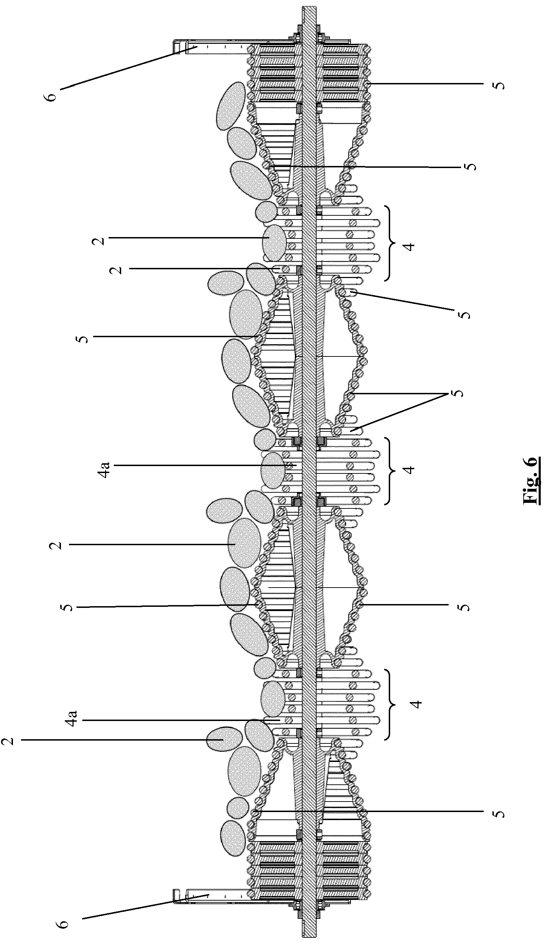

Each planting belt unit (4) comprises six conveying belts (4a) and the return means (5) are also conveying belts (5). The conveying belts (4a) of the planting belt units (4) thus move the potatoes (2) in the direction of the front side of the belt bed (3), viewed along the direction of travel (A), and the return means (5) thus move the potatoes (2) in the direction of the rear side of the belt bed (3). The return means (5), which are arranged between two successive planting belt units (4) of the said planting belt units (4), are arranged in succession. As a result thereof, the potatoes (2) can roll over these return means (5) between these successive planting belt units (4). This means that potatoes (2) which are between these successive planting belt units (4) have a degree of space to move. As a result thereof, the risk of the singulation on the planting belt units (4) being impeded is rather small.
At the location of the supply point (I), viewed in a direction at right angles to the supply direction, the return means (5) are arranged at a downward slant towards the respective planting belt units (4) and, at the location of the discharge point (O), viewed in a direction at right angles to the supply direction, arranged at an upward slant towards the respective planting belt units (4). As a result thereof, the section of the belt bed (3) at right angles to the supply direction will have an undulating pattern. This can be seen in Figs. 5 to 8. Due to this undulating pattern, a satisfactory singulation is achieved at the location of the planting belt units (4). This is clearly illustrated in Figs. 5 and 6 by means of potatoes (2) which are situated on the belt bed (3) at the location of the supply point (I).
In this case, two embodiments of the belt bed (3) are illustrated. Figs. 3 and 5 show a first embodiment and Figs. 4 and 6 show a second embodiment. With the second embodiment, the planting belt units (4) are placed a smaller distance apart than with the first embodiment. In this case, the planting belt units (4) can be placed closer together, as the potatoes (2) have space to move across the entire width of the return means (5) which are situated between two successive planting belt units (4).

Here, the distance between two successive planting belt units (4) is constant. Each of the two outer planting belt units (4) extends along a longitudinal side (6), being a wall (6), of the belt bed (3). Here, the distance between each wall (6) and its respective planting belt unit (4) is at least half the distance between two successive planting belt units (4). With the second embodiment, the distance between each wall (6) and its respective planting belt unit (4) is more than 70% of the distance between two successive planting belt units (4).
The belt bed (3) is furthermore hingeably arranged in the belt planter (1), i.e. hingeable with respect to the transport element, around the hinge axis (B) along the direction of travel (A). Furthermore, the belt planter (1) comprises a first slope sensor (21) in order to determine the slope of the belt bed (3) with respect to the level. Furthermore, the belt planter (1) comprises two hydraulic cylinders (9) as control means (9) which are connected to the frame (19) for rotating the belt bed (3) around the said hinge axis (B) on the basis of the slope determined by the slope sensor (21). To this end, the belt planter (1) comprises a rear axle (14) with rear wheels (13) which is arranged so as to be hingeable around this hinge axis (B), this rear axle (14) being hingeable with respect to the frame (19).
The accessories beam (10a), and thus the furrow opener (10), is also arranged so as to be hingeable around this said hinge axis (B) with respect to the belt bed (3), so that the furrow opener (10) can follow the slope of the field (17). As the furrow opener (10) is arranged so as to be hingeable around the said hinge axis (B) with respect to the belt bed (3), it is possible to adjust the position of the furrow opener (10) on the basis of the slope of the piece of land (17), even after the belt bed (3) has been positioned at a smaller angle than the piece of land (17) or even level. Thus, variation of the depth of the grooves which have been formed is limited in this case. The wheels (12) for supporting the furrow opener (10) are arranged on either side of the hinge axis (B) arranged. By means of the wheels (12), it is very easy to follow the slope of the piece of land (17). In this case, there will be an automatic tilting of the furrow opener (10), as the furrow opener (10), on account of its weight, rests on the piece (17) of land by means of the wheels (12) and the wheels (12) follow the piece (17) of land.
By means of the first slope sensor (21) and the hydraulic cylinders (9), the belt bed (3) is positioned virtually horizontally, and thus level, during planting of the seedlings. If planting takes place on a sloping piece (17) of land, this means that the belt bed (3) has to be kept in a horizontal position, so that planting can always proceed in an optimum manner. In addition to this first slope sensor (21), the hydraulic cylinders may be controlled on the basis of measurements using one or more of the following sensors: a second slope sensor (22) for determining the slope of the transport element with respect to the level, an angle sensor (23) for determining the angular rotation of the belt bed (3) with respect to the transport element, a pressure sensor which forms part of a said hydraulic cylinder (9), etc.

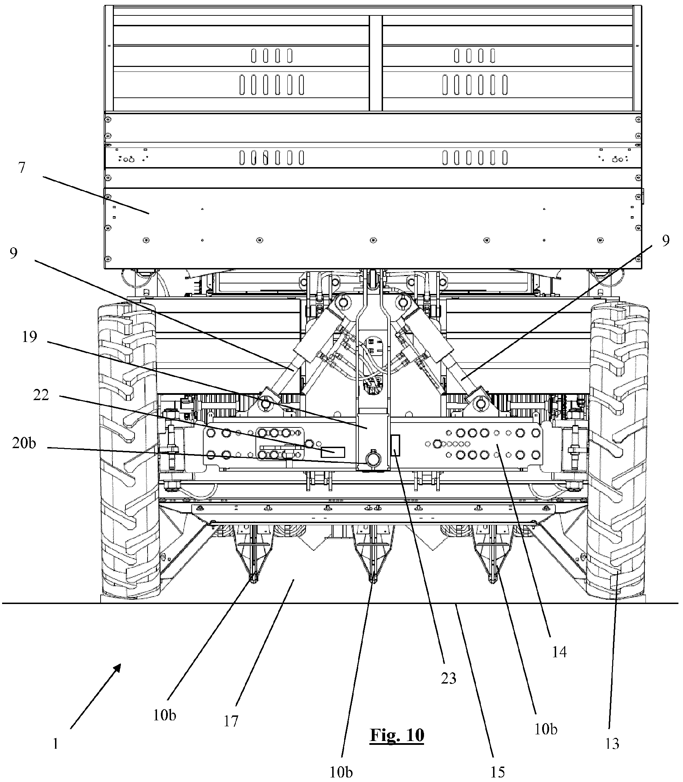

Fig. 10 shows a rear view of the belt planter (1) when planting takes place on a piece of land (17) which extends along a horizontal plane (15). Here, it can be seen that the belt bed (3) extends horizontally along the horizontal plane (15) and that the rear axle (14) also extends horizontally. Both cylinders (9) are in the same position.

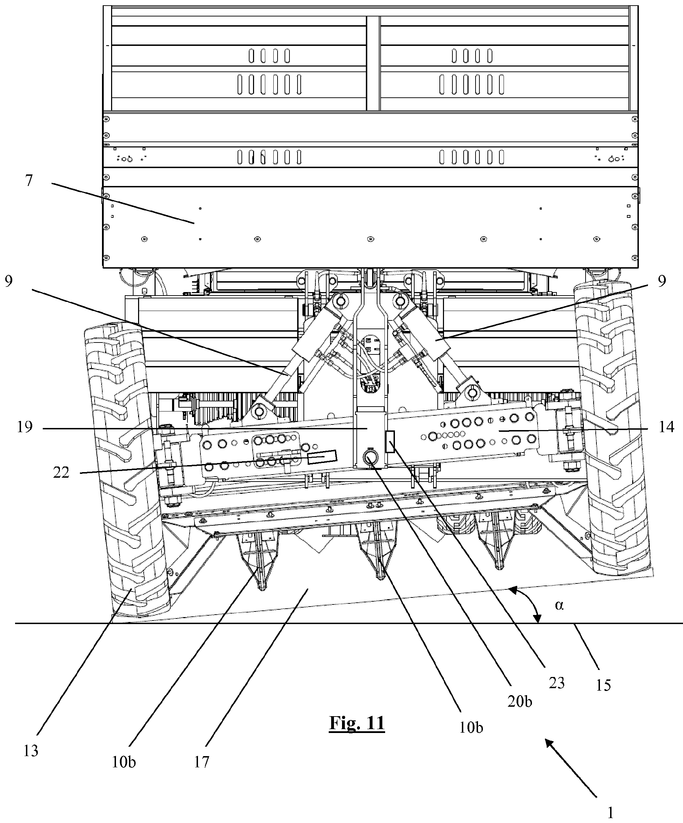

Fig. 11 shows a rear view of the belt planter (1) when planting takes place on a piece of land (17) which makes an angle alpha (α) with the horizontal plane (15). Here, it can be seen that the belt bed (3) also extends horizontally along the horizontal plane (15), but that the rear axle (14) makes the same angle alpha (α) with the horizontal plane (15). Both cylinders (9) are not in the same position and thus position the belt bed (3) horizontally.

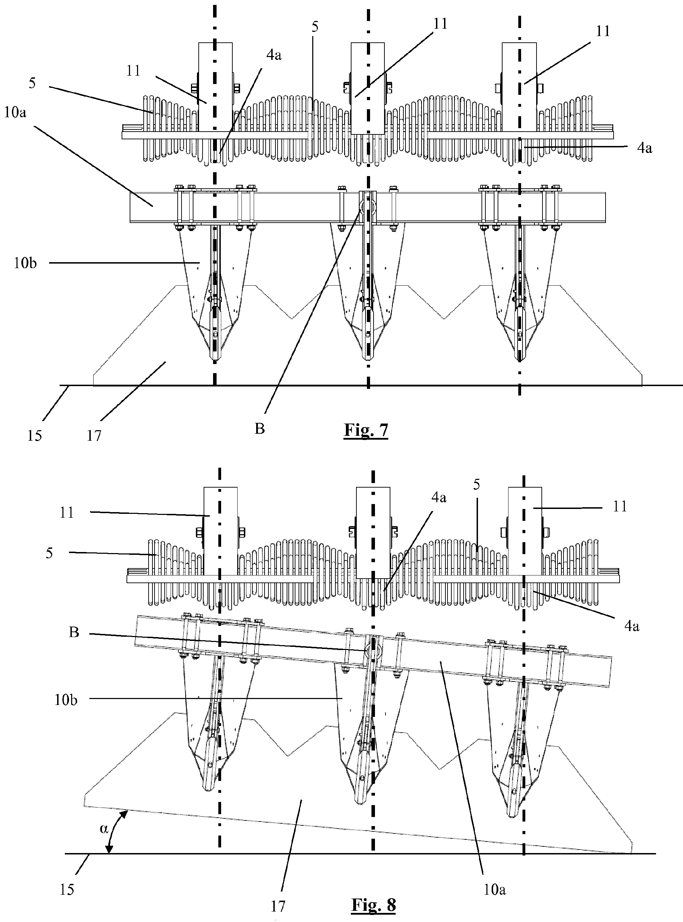

The position of the furrow opener (10) with respect to the belt bed (3) during planting on a horizontal piece of land is diagrammatically illustrated in Fig. 7. Here, it can be seen that the belt bed (3) extends horizontally along a horizontal plane (15) and the field (17) also extends horizontally and the furrow opener (10) also extends horizontally. As a result thereof, the potatoes (2) fall in the centre of the formed furrows (see dashed line).

The position of the furrow opener (10) with respect to the belt bed (3) during planting on a slightly sloping field (17) is diagrammatically illustrated in Fig. 8. The slope of the field (17) with respect to the horizontal plane (15) is represented here by the angle alpha (α). Here, it can be seen that the belt bed (3) extends horizontally, the field (17) extends at an angle corresponding to the angle α. The accessories beam (4a), and thus the furrow opener (10), here also extends at an angle α, so that 3 grooves of virtually identical depth are formed. In this case, the potatoes (2) still fall into the formed furrows (see dashed line) in a satisfactory manner.

## Claims

1. Belt planter (1) for planting seedlings, such as potatoes (2) or other tuberous or bulbous plants, while the belt planter is moving (1) along a direction of travel (A), comprising a belt bed (3) comprising at least two planting belt units (4), each of which is provided in order to supply seedlings to be planted along a supply direction in one row from a supply point to a discharge point, and comprising return means (5) on either side of each planting belt unit (4) in order to return seedlings which fall out of the row counter to the supply direction towards the supply point, which return means (5) are successively arranged between two successive planting belt units (4) of the said planting belt units (4), so that seedlings can roll between these successive planting belt units (4) on these return means (5) **characterized in that** the belt bed (3) is arranged in the belt planter (1) so as to be hingeable around a hinge axis (B) along the direction of travel (A), and **in that** the belt planter (1) comprises a slope sensor (21) in order to determine the slope of the belt bed (3) with respect to the level and comprises control means (9) in order to rotate the belt bed (3) around the said hinge axis (B) on the basis of the slope determined by the slope sensor (21).

2. Belt planter (1) according to Claim 1, **characterized in that** the successively arranged return means (5) are successively arranged in connection with the discharge point.

3. Belt planter (1) according to Claim 1 or 2, **characterized in that** the successively arranged return means (5) are successively arranged over at least ¼ of the length of these return means (5).

4. Belt planter (1) according to one of the preceding claims, **characterized in that** the return means (5) at the location of the supply point are arranged at a downward slant towards the respective planting belt units (4), viewed in a direction at right angles to the supply direction, and at the location of the discharge point, viewed in a direction at right angles to the supply direction, are arranged at an upward slant to the respective planting belt units (4).

5. Belt planter (1) according to one of the preceding claims, **characterized in that** the return means (5) are configured as conveying belts (5).

6. Belt planter (1) according to one of Claims 1 to 4, **characterized in that** the return means (5) between the two successive planting belt units (4) form part of the same conveyor belt.

7. Belt planter (1) according to one of the preceding claims, **characterized in that** a first planting belt unit (4) of the successive planting belt units (4) is arranged between a longitudinal side (6) of the belt bed (3) and the second subsequent planting belt unit (4) and the width of the return means (5) between this first planting belt unit (4) and the said longitudinal side (6) of the belt bed (3) is at least as wide as half the width of the return means (5) between the first planting belt unit (4) and the second planting belt unit (4).

8. Belt planter (1) according to one of the preceding claims, **characterized in that** the belt planter (1) comprises a transport element in order to support the belt bed (3) and in order to move the belt bed (3) along the direction of travel (A), in which the belt bed (3) is arranged so as to be hingeable with respect to the transport element in order to arrange it in the belt planter (1) so as to be hingeable.

9. Belt planter (1) according to one of the preceding claims, **characterized in that** the belt planter (1) comprises a second slope sensor (22) in order to determine the slope of the transport element with respect to the level, and **in that** the control means (9) are provided in order to rotate the belt bed (3) around the said hinge axis (B) on the basis of the slope determined by this second slope sensor (22).

10. Belt planter (1) according to one of the preceding claims, **characterized in that** the belt planter (1) comprises an angle sensor (23) in order to determine the angular rotation of the belt bed (3) with respect to the transport element, and **in that** the control means (9) are provided in order to rotate the belt bed (3) around the said hinge axis (B) on the basis of the angular rotation determined by this angle sensor (23).

11. Belt planter (1) according to one of the preceding claims, **characterized in that** this belt planter (1) comprises a furrow opener (10) for forming furrows in order to arrange seedlings to be planted therein, in which this furrow opener (10) is arranged with respect to the belt bed (3) so as to be hingeable around a hinge axis (B) along the direction of travel (A).

## Patentansprüche

1. Bandpflanzmaschine (1) zum Pflanzen von Sämlingen, wie etwa Kartoffeln (2) oder anderen knollen- oder zwiebelartigen Pflanzen, wobei sich die Bandpflanzmaschine (1) entlang einer Laufrichtung (A) bewegt, umfassend ein Bandbett (3), das zumindest zwei Pflanzbandeinheiten (4) umfasst, wovon jede bereitgestellt ist, um zu pflanzende Sämlinge entlang einer Zufuhrrichtung in einer Reihe von einer Zufuhrstelle einer Abgabestelle zuzuführen, und umfassend Rückführmittel (5) auf beiden Seiten jeder Pflanzbandeinheit (4), um Sämlinge, die aus der Reihe fallen, entgegen der Zufuhrrichtung zur Zufuhrstelle zurückzuführen, wobei die Rückführmittel (5) aufeinanderfolgend zwischen zwei aufeinanderfolgenden Pflanzbandeinheiten (4) der Pflanzbandeinheiten (4) angeordnet sind, so dass Sämlinge zwischen diesen aufeinanderfolgenden Pflanzbandeinheiten (4) auf diesen Rückführmitteln (5) rollen können, **dadurch gekennzeichnet, dass** das Bandbett (3) so in der Bandpflanzmaschine (1) angeordnet ist, dass es um eine Gelenkachse (B) entlang der Laufrichtung (A) gelenkig ist, und dadurch, dass die Bandpflanzmaschine (1) einen Neigungssensor (21) umfasst, um die Neigung des Bandbetts (3) in Bezug auf die Ebene zu bestimmen, und Steuermittel (9) umfasst, um das Bandbett (3) auf der Grundlage der durch den Neigungssensor (21) bestimmten Neigung um die Gelenkachse (B) zu drehen.

2. Bandpflanzmaschine (1) nach Anspruch 1, **dadurch gekennzeichnet, dass** die aufeinanderfolgend angeordneten Rückführmittel (5) aufeinanderfolgend in Verbindung mit der Abgabestelle angeordnet sind.

3. Bandpflanzmaschine (1) nach Anspruch 1 oder 2, **dadurch gekennzeichnet, dass** die aufeinanderfolgend angeordneten Rückführmittel (5) über zumindest 1/4 der Länge dieser Rückführmittel (5) aufeinanderfolgend angeordnet sind.

4. Bandpflanzmaschine (1) nach einem der vorangehenden Ansprüche, **dadurch gekennzeichnet, dass** die Rückführmittel (5) an der Position der Zufuhrstelle, in einer zur Zufuhrrichtung rechtwinkligen Richtung betrachtet, nach unten zu den jeweiligen Pflanzbandeinheiten (4) hin geneigt angeordnet sind und an der Position der Abgabestelle, in einer zur Zufuhrrichtung rechtwinkligen Richtung betrachtet, nach oben zu den jeweiligen Pflanzbandeinheiten (4) geneigt angeordnet sind.

5. Bandpflanzmaschine (1) nach einem der vorangehenden Ansprüche, **dadurch gekennzeichnet, dass** die Rückführmittel (5) als Förderbänder (5) ausgebildet sind.

6. Bandpflanzmaschine (1) nach einem der Ansprüche 1 bis 4, **dadurch gekennzeichnet, dass** die Rückführmittel (5) zwischen den beiden aufeinanderfolgenden Pflanzbandeinheiten (4) Teil desselben Förderbands sind.

7. Bandpflanzmaschine (1) nach einem der vorangehenden Ansprüche, **dadurch gekennzeichnet, dass** eine erste Pflanzbandeinheit (4) der aufeinanderfolgenden Pflanzbandeinheiten (4) zwischen einer Längsseite (6) des Bandbetts (3) und der zweiten darauffolgenden Pflanzbandeinheit (4) angeordnet ist und die Breite der Rückführmittel (5) zwischen dieser ersten Pflanzbandeinheit (4) und der Längsseite (6) des Bandbetts (3) mindestens halb so breit wie die Breite der Rückführmittel (5) zwischen der ersten Pflanzbandeinheit (4) und der zweiten Pflanzbandeinheit (4) ist.

8. Bandpflanzmaschine (1) nach einem der vorangehenden Ansprüche, **dadurch gekennzeichnet, dass** die Bandpflanzmaschine (1) ein Transportelement umfasst, um das Bandbett (3) zu stützen und um das Bandbett (3) entlang der Laufrichtung (A) zu bewegen, wobei das Bandbett (3) so angeordnet ist, dass es in Bezug auf das Transportelement gelenkig ist, um es gelenkig in der Bandpflanzmaschine (1) anzuordnen.

9. Bandpflanzmaschine (1) nach einem der vorangehenden Ansprüche, **dadurch gekennzeichnet, dass** die Bandpflanzmaschine (1) einen zweiten Neigungssensor (22) umfasst, um die Neigung des Transportelements in Bezug auf die Ebene zu bestimmen, und dadurch, dass die Steuermittel (9) bereitgestellt sind, um das Bandbett (3) auf der Grundlage der durch diesen zweiten Neigungssensor (22) bestimmten Neigung um die Gelenkachse (B) zu drehen.

10. Bandpflanzmaschine (1) nach einem der vorangehenden Ansprüche, **dadurch gekennzeichnet, dass** die Bandpflanzmaschine (1) einen Winkelsensor (23) umfasst, um die Winkeldrehung des Bandbetts (3) in Bezug auf das Transportelement zu bestimmen, und dadurch, dass die Steuermittel (9) bereitgestellt sind, um das Bandbett (3) auf der Grundlage der durch diesen Winkelsensor (23) bestimmten Winkeldrehung um die Gelenkachse (B) zu drehen.

11. Bandpflanzmaschine (1) nach einem der vorangehenden Ansprüche, **dadurch gekennzeichnet, dass** diese Bandpflanzmaschine (1) einen Furchenöffner (10) zur Bildung von Furchen umfasst, um darin zu pflanzende Sämlinge anzuordnen, wobei dieser Furchenöffner (10) in Bezug auf das Bandbett (3) so angeordnet ist, dass er um eine Gelenkachse (B) entlang der Laufrichtung (A) gelenkig ist.

## Revendications

1. Machine de plantation à courroie (1) pour la plantation de plants, tels que des pommes de terre (2) ou d'autres plantes tubéreuses ou bulbeuses, pendant que la machine de plantation à courroie se déplace (1) le long d'une direction de déplacement (A), comprenant un lit de courroie (3) comprenant au moins deux unités de courroie de plantation (4), dont chacune permet de fournir des plants à planter le long d'une direction d'alimentation en une rangée d'un point d'alimentation à un point de déchargement, et comprenant des moyens de renvoi (5) de chaque côté de chaque unité de courroie de plantation (4) afin de renvoyer les plants qui tombent de la rangée dans le sens contraire à la direction d'alimentation vers le point d'alimentation, lesquels moyens de renvoi (5) étant disposés successivement entre deux unités de courroie de plantation (4) successives desdites unités de courroie de plantation (4), de sorte que les plants puissent rouler entre ces unités de courroie de plantation (4) successives sur ces moyens de renvoi (5), **caractérisé en ce que** le lit de courroie (3) est disposé dans la machine de plantation à courroie (1) de sorte à pouvoir être articulé autour d'un axe d'articulation (B) le long de la direction de déplacement (A), et **en ce que** la machine de plantation à courroie (1) comprend un capteur de pente (21) afin de déterminer la pente du lit de courroie (3) par rapport au niveau et comprend un moyen de commande (9) afin de faire tourner le lit de courroie (3) autour dudit axe d'articulation (B) sur la base de la pente déterminée par le capteur de pente (21).

2. Machine de plantation à courroie (1) selon la revendication 1, **caractérisée en ce que** les moyens de renvoi (5) disposés successivement sont disposés successivement en liaison avec le point de déchargement.

3. Machine de plantation à courroie (1) selon la revendication 1 ou 2, **caractérisée en ce que** les moyens de renvoi (5) disposés successivement sont disposés successivement sur au moins 1/4 de la longueur de ces moyens de renvoi (5).

4. Machine de plantation à courroie (1) selon l'une des revendications précédentes, **caractérisée en ce que** les moyens de renvoi (5) au niveau de l'emplacement du point d'alimentation sont disposés en biais vers le bas en direction des unités de courroie de plantation (4) respectives, vu dans une direction à angle droit par rapport à la direction d'alimentation, et à l'emplacement du point de déchargement, vu dans une direction à angle droit par rapport à la direction d'alimentation, sont disposés en biais vers le haut par rapport aux unités de courroie de plantation (4) respectives.

5. Machine de plantation à courroie (1) selon l'une des revendications précédentes, **caractérisée en ce que** les moyens de renvoi (5) sont conçus comme des courroies transporteuses (5).

6. Machine de plantation à courroie (1) selon l'une des revendications 1 à 4, **caractérisée en ce que** les moyens de renvoi (5) entre les deux unités de courroie de plantation (4) successives font partie de la même courroie transporteuse.

7. Machine de plantation à courroie (1) selon l'une des revendications précédentes, **caractérisée en ce qu'**une première unité de courroie de plantation (4) des unités de courroie de plantation (4) successives est disposée entre un côté longitudinal (6) du lit de courroie (3) et la seconde unité de courroie de plantation (4) suivante et la largeur des moyens de renvoi (5) entre cette première unité de courroie de plantation (4) et ledit côté longitudinal (6) du lit de courroie (3) est au moins aussi large que la moitié de la largeur des moyens de renvoi (5) entre la première unité de courroie de plantation (4) et la seconde unité de courroie de plantation (4).

8. Machine de plantation à courroie (1) selon l'une des revendications précédentes, **caractérisée en ce que** la machine de plantation à courroie (1) comprend un élément de transport afin de supporter le lit de courroie (3) et afin de déplacer le lit de courroie (3) le long de la direction de déplacement (A), le lit de courroie (3) étant conçu de sorte à pouvoir être articulé par rapport à l'élément de transport afin de le disposer dans la machine de plantation à courroie (1) de sorte à pouvoir être articulé.

9. Machine de plantation à courroie (1) selon l'une des revendications précédentes, **caractérisée en ce que** la machine de plantation à courroie (1) comprend un second capteur de pente (22) afin de déterminer la pente de l'élément de transport par rapport au niveau, et **en ce que** le moyen de commande (9) est fourni afin de faire tourner le lit de courroie (3) autour dudit axe de charnière (B) sur la base de la pente déterminée par ce second capteur de pente (22).

10. Machine de plantation à courroie (1) selon l'une des revendications précédentes, **caractérisée en ce que** la machine de plantation à courroie (1) comprend un capteur d'angle (23) afin de déterminer la rotation angulaire du lit de courroie (3) par rapport à l'élément de transport, et **en ce que** le moyen de commande (9) est fourni afin de faire tourner le lit de courroie (3) autour dudit axe d'articulation (B) sur la base de la rotation angulaire déterminée par ce capteur d'angle (23).

11. Machine de plantation à courroie (1) selon l'une des revendications précédentes, **caractérisée en ce que** cette machine de plantation à courroie (1) comprend un ouvreur de sillon (10) pour former des sillons afin d'y disposer des plants à planter, cet ouvreur de sillon (10) étant disposé par rapport au lit de courroie (3) de sorte à pouvoir être articulé autour d'un axe d'articulation (B) le long de la direction de déplacement (A).
